# EUROPEAN PATENT APPLICATION

(11) **EP 1 579 794 A1**
(43) Date of publication of application: **28.09.2005**
(21) Application number: 05006437.7
(22) Date of filing: 23.03.2005
(51) Int. Cl.: A47J 37/12

(54) **Cooking apparatus**

(30) Priority: 24.03.2004 GB 0406551
(71) Applicant: Haralambous, Kallis, Birmingham B24 8HJ (GB)
(72) Inventor: Haralambous, Kallis, Birmingham B24 8HJ (GB)
(74) Representative: Shaw, Matthew Nigel

(57) **Abstract**

Apparatus (10) for cooking foods comprising a housing (11) and a pan (12) for receiving foods to be cooked, the housing having an inlet (18) for the introduction of gaseous fuel and an outlet (27) for fuel combustion products, the housing and pan each having walls spaced from each other so as to allow gas to flow therebetween, with a baffle (40,41) being provided between the housing and pan to cause heated gas to flow around the pan, towards the outlet (27). In a preferred embodiment, combustion is assisted by a source of negative pressure in the form of an extractor fan operatively connected to a flue outlet.

## Description

### Description of Invention

This invention relates, in general terms, to the field of cooking apparatus and appliances and relates, in particular (but by no means exclusively) to oil and fat-based frying apparatus such as is commonly used in commercial food outlets such as fish and chip shops and the like.

In broad terms, such fryers comprise a vessel adapted to receive the frying medium such as oil, lard or the like (known as a frying pan or frypot) and a heater assembly by which the cooking medium is raised to an appropriate temperature to allow food disposed within the pan to be cooked.

In the design of such apparatus, it is important to consider not only the efficiency of the heat transfer which occurs, from the hot combustion products of a (usually gaseous) fuel to the cooking medium, but also the evenness with which the heat is passed to the contents of the pan. As will be understood, it is important not only to ensure that an appropriate cooking temperature can be reached in a minimum amount of time but also that this temperature can quickly be re-attained subsequent to a quantity of (often frozen) food being deposited into the hot oil or fat.

GB 2342569B discloses apparatus of this general type, in which combustion products are caused to flow along the outsides of both side walls of a cooking pan, with the wall flow paths having a somewhat U-shaped configuration such that heated gas is caused to pass twice, therealong. With the constructions shown in GB'569, only three sides of the generally rectangular pan (when viewed from above) are heated and this inevitably limits the efficiency of the cooking apparatus concerned.

### Summary of the Invention

In accordance with a first aspect of the present invention, there is provided apparatus for cooking foods comprising a housing and a pan for receiving foods to be cooked, the housing having an inlet for the introduction of gaseous fuel and an outlet for fuel combustion products, the housing and pan each having walls spaced from each other so as to allow gas to flow therebetween, with a baffle being provided between the housing and pan to cause heated gas to flow around the pan, towards the outlet.

Preferably, the baffle is disposed so as to direct heated gas around the pan in a substantially single direction.

Where the pan has front, rear and side walls, the baffle preferably is operative to direct the heated gas around each said wall of the pan.

The pan may have a floor, spaced from a base of the housing, with the inlet being disposed towards a front part of the floor such that heated gas passes beneath the floor of the pan, prior to being directed around said walls.

In this way, it will be understood that heat may be imparted to the cooking medium through the floor and each wall of the pan, thus increasing the efficiency of the apparatus.

There may be provided, upstream of the baffle, a flow restrictor operative to restrict the flow of some of the heated gas so as to assist the proper circulation of heated gas around the pan.

The restrictor may be graduated such that different degrees of flow restriction are provided by different parts thereof.

In a preferred embodiment, the flow restrictor comprises a barrier disposed towards the base of the housing.

The effective height of the barrier may decrease towards one end thereof.

Preferably, the effective height decreases towards that part of the barrier disposed closest to the baffle.

The barrier may be disposed between the base of the housing and a lower part of the pan.

The gap that exists between one end of the barrier and the pan may be approximately twice that which exists between the other end and the pan.

In a preferred implementation, the apparatus may be used in conjunction with a source of negative pressure to withdraw the combustion products and to assist in the introduction of combustion air, through the inlet.

A barrier constructed in this way allows the suction effect of such a "fan-assisted" arrangement to be evened-out along its length, thus assisting in the provision of even heating to the rear wall of the pan.

The baffle may comprise an inner wall disposed between rear walls of the pan and housing.

Preferably, the baffle is disposed adjacent the outlet.

The baffle and outlet may be disposed to one side of the rear wall of the housing.

The outlet may be adjustable so as to vary the degree of aspiration provided by an extractor connected thereto.

Preferably, the outlet is adjustable by means of a valve.

The valve may be operably connected to a control member disposed towards the front of the apparatus.

In this way, the degree of aspiration may be adjusted, perhaps manually, in a readily convenient manner, with no or little disassembly of the apparatus being required.

The pan may be releasably locatable within the housing. This, it will be understood, facilitates cleaning and maintenance of both the pan and housing.

The baffle may be provided by a fin disposed on an outer surface of the pan's rear wall.

The fin may be locatable within a channel or guide provided on an inner surface of the housing's rear wall.

In accordance with a second aspect of the present invention, there is provided a cooking pan for removable location within a combustion chamber, the pan having walls which, when the pan is so located, are spaced from walls of the chamber so as to allow heated gas to flow therebetween, and a baffle operative, in use, to cause heated gas to flow around the pan towards an outlet of the chamber.

The baffle may be disposed such that, in use, it directs the heated gas around the pan in a substantially single direction.

The baffle may be operative, in use, to direct the heated gas around each wall of the pan.

In accordance with a third aspect of the present invention, there is provided, in combination, a cooking pan and a combustion chamber in which the pan is removably locatable, the pan and chamber, when so located, having walls spaced from each other so as to allow gas to flow therebetween, a baffle being provided on at least one of the pan and chamber such that, in use, heated gas is caused to flow around the pan, towards an outlet of the chamber.

In accordance with a fourth aspect of the present invention, there is provided a housing for removable reception of a cooking pan, the housing having an inlet for the introduction of gaseous fuel and an outlet for fuel combustion products, the housing having a flow restrictor operative, when the pan is so received, to restrict the flow of some of the heated gas so as to assist in effecting circulation of the heated gas around the pan, towards the outlet.

Each aspect of the invention set out above may incorporate one or more features of the other aspects referred to.

### Brief Description of the Drawings

Specific and non-limiting embodiments of the invention, in its various aspects, will now be described in greater detail, strictly by way of example only, by reference to the accompanying drawings, of which:
Figure 1 is an isometric, exploded view of the main components of the cooking apparatus;
Figure 2 shows two of the components of Figure 1, from the rear; and
Figure 3 shows the pan and housing of Figures 1 and 2 co-located, in position on a support frame, and with a gas burner attached.

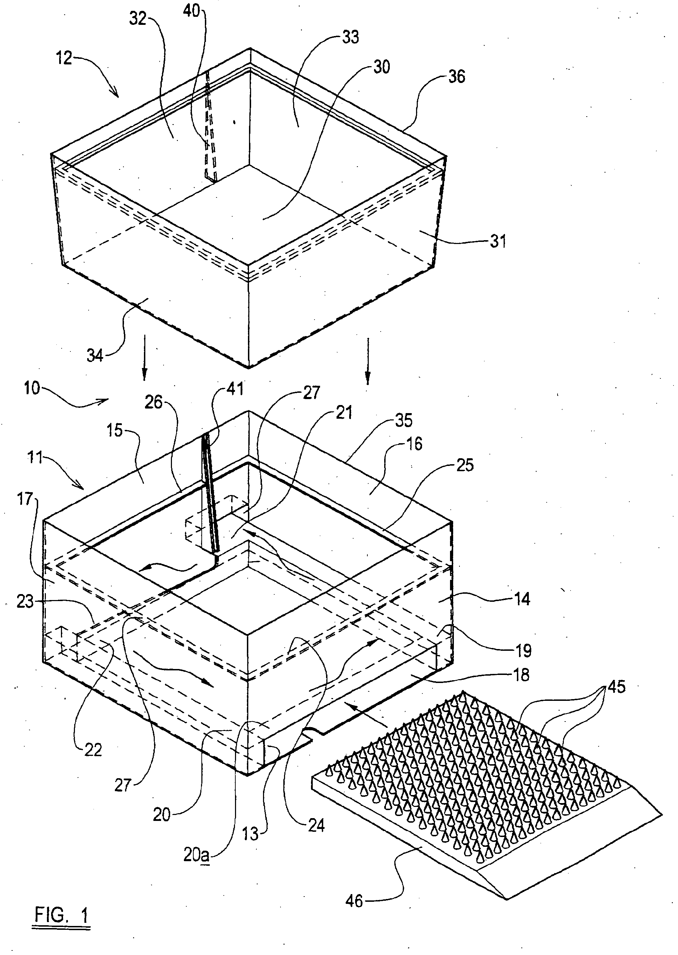

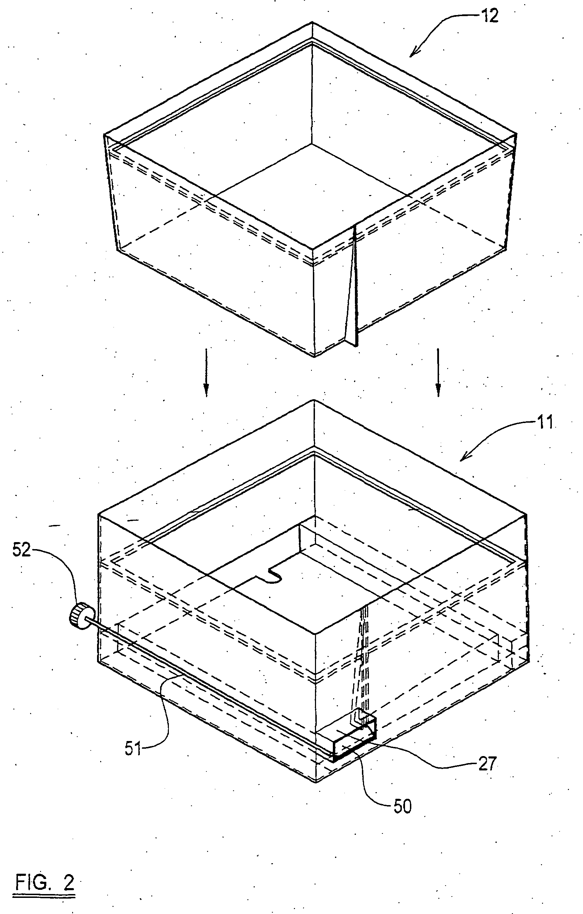

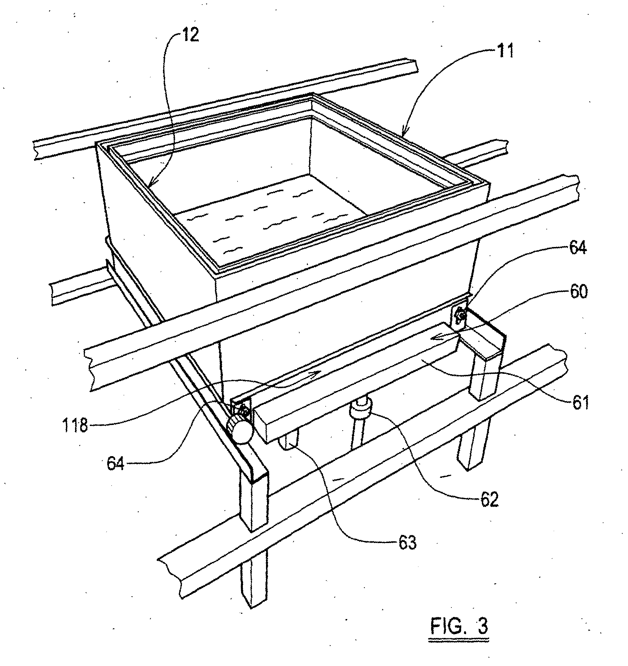

Referring first to Figures 1 and 2, cooking apparatus 10 comprises a housing/combustion chamber 11 and a pan/frypot 12 which, in this embodiment, is removably locatable within the housing 11. The housing 11 has a base in the form of a generally planar floor 13, front and rear walls 14/15 and side walls 16/17. A generally rectangular aperture 18 is provided, towards the bottom of the front wall 14, to serve as an inlet for the introduction of gaseous fuel from an appropriately-configured burner, as shown (for example) in Figure 3. The base 13, along its sides, is provided with a pair of ledges 19 and 20, with the ledge 19 continuing, in a somewhat dog-leg fashion, into a shortened ledge 21, disposed towards the bottom of the rear wall 15. A ledge 20a lies above the inlet 18, between the forward ends of the side ledges 19 and 20. A high-temperature gasket (not shown), conveniently made of a ceramic fibre material, is provided on the ledges 19, 20, 20a and 21, so as to provide a gas-tight seal between those ledges and the pan 12, when it is located within the housing. Extending between the ledges 20 and 21 is a generally upstanding barrier 22 in the form of a metallic strip, bar or the like. As can be seen from both Figures 1 and 2, the upper edge 23 of the barrier 22 slopes down towards the side wall 14, for a purpose described hereafter.

The inner surfaces of the front, rear and side walls 14 to 17 are each provided with an inwardly-extending shelf 24, 25, 26 and 27. An outlet aperture (or flue outlet) 27 is provided, towards the bottom right hand corner of the rear wall 15, for the exit of combustion products resulting from the combustion of the gaseous fuel input via the aperture 18.

The outlet 27 may be connected, in generally conventional manner, to a source of negative pressure such as an extractor fan, which assists not only in the safe removal of hot (and potentially hazardous) combustion products but also in the aspiration of an appropriate quantity of combustion air, through the inlet 18.

The pan 12 has a floor 30 and front/rear/side walls 31, 32, 33 and 34. Each of these walls tapers slightly inwardly towards the floor 30 such that, when the pan is located within the housing 11, the upper rims 35 and 36 of the housing and pan adopt a closely abutting relationship, but with the lower edges of the walls of the pan 12 being spaced from the walls of the housing 11.

When so located, the outer surfaces of the walls of the pan 12 rest against - in sealing contact with - the inner edges of the shelves 24 to 27, thus defining a space between the walls of the pan and housing through which gas may flow.

When the pan 12 is located within the housing 11, the floor 30 of the pan rests on the ledges 19, 20, 20a and 21 of the housing 11. It will be appreciated, from this, that a gap will thus exist between the lower surface of the floor 30 and the upper edge of the barrier 23, by virtue of its downward slope. Similarly, it will be understood that the somewhat tapering, or wedge-shaped, aperture thus defined is in gas flow communication with the space defined between the respective walls of the pan and housing 11.

As shown in Figures 1 and 2, the pan 12 is provided with a somewhat triangular fin 40 which protrudes away from the outer surface of the rear wall 32. The fin 40 is configured so as to slide - and thus locate - within generally parallel guide fins 41 disposed on the inner surface of the rear wall 15 of the housing 11. It will be understood, from this, that with the pan located within the housing 11, the effect of the fins 40 and 41 is to provide a barrier to any gas flow directly from the rear wall 15 to the outlet 27, thus forcing the heated combustion products to flow away from the baffle formed by the fins 40, 41, in the general direction shown by the wavy arrows in Figure 1.

By virtue of the continuous space defined between the walls of the pan and housing, hot gas entering the space adjacent the rear wall 15 of the housing is caused to flow generally to the left of the rear wall 15, then towards the front of the housing, along the side wall 17, along the front wall 14 of the housing, along the side wall 16 of the housing (in a generally rearwardly direction) and thus, finally, to the outlet 27.

From this, it will be understood that the hot combustion products are caused to pass, in contact with, each of the four walls of the pan 12, thus increasing the amount of heat transfer that can be achieved. In addition, as will be understood from the drawings, heat is also imparted to the pan 12 through its floor 30, by virtue of a plurality of ceramic heating cones 45 provided on an upper surface of a burner tray 46, which, in use, is disposed on the base 13 of the housing. In this way, heat is supplied to the pan through its floor and through each of its four walls, with the heated gas flowing around the walls of the pan in a substantially single direction - somewhat anti-clockwise, as Figure 1 makes clear. It will be understood, of course, that a generally clockwise flow could be effected by re-positioning the baffle and flue outlet towards the left side of the rear of the apparatus, and by "reversing" the tapered barrier.

The sloping upper edge 23 of the barrier 22, and thus the tapered configuration of the gap, assists to equalise the negative pressure that exists along the gap, by virtue of the extractor fan which, in this embodiment, is connected to the flue outlet 27. An even gap would tend to allow a greater degree of suction to exist towards the left side of the rear wall, thus pulling an unacceptable proportion of the combustion products towards the rear left corner of the apparatus, leading to uneven heat distribution across the rear wall of the pan. In place of a sloping barrier, it is thought that an apertured barrier may also be suitable, with the apertures being provided along its length, in gradually increasing sizes (from left to right, viewed as per Figure 1). The configuration of the barrier may also assist in effecting proper circulation of the heated gas in the general direction shown by the arrows of Figure 1, with the reduced gap at one end of the barrier (near the ledge 20) restricting the amount of gas flow and thus potentially-reducing the effect of any counter-acting pressure that might otherwise exist.

It will be understood, by those well-versed in the relevant art, that the degree of graduation (by way of either a sloped or apertured barrier) required to achieve these effects will vary in accordance with a number of factors, such as the required heat input (and thus incoming gas flow) and the size of the cooking pan. However, the applicant has found, through experimentation, that with the sloped configuration, a minimum gap (towards the upper end of the edge 23) of about 10mm and a maximum gap of about 20mm (at the other end of the upper edge 23) gives good results, for a pan having approximate (plan view) dimensions of 62cm by 62cm.

Figure 2, as will be clear, shows both the housing and pan of Figure 1, albeit from the rear. Figure 2 also shows, however, that the outlet 27 may be provided with an adjustable valve in the form of a moveable vane 50 controlled, via a connecting rod 51, by a forwardly disposed control member 52 in the form of a rotatable wheel, knob or other such handle. Whilst the precise operational mechanism is unimportant (it will be understood that many mechanical contrivances could be used, in order to adjust the vane 50), the provision of a forwardly-disposed control member allows the outlet to be adjusted and thus for the degree of aspiration provided by an external extractor fan to be varied. This can be important in order to adjust the fuel/air mixture and also to compensate for different suction forces that may result through the use of different ducting lengths, from the outlet 27 to the remotely-located extractor fan. Providing the control member 52 towards the front of the apparatus makes it easy for an operator to adjust the degree of aspiration, without needing to disassemble the bulk of the apparatus.

Looking lastly at Figure 3, this shows the pan and housing of Figures 1 and 2 located together, and positioned on a (rather simplified) framework, of the type that might be found within a commercial frying assembly.

As shown, a gas burner 60 is attached adjacent the combustion chamber entrance (shown generally at 118) of the housing 11, with the burner 60 (in this example) comprising a T-shaped arrangement provided by an elongate burner bar 61 and a gas feed pipe 62, in addition to a pilot light 63, in generally conventional manner. As shown, the burner assembly can be detached from the housing 11 by means of threaded fasteners (e.g. bolts) 64, to allow access to the underside of the pan 12, and to facilitate removal of the burner tray 46.

What will also be appreciated from Figure 3 is that the upper rims of the housing and pan lie closely adjacent each other, in abutting (or near-abutting) relationship. In order to ensure a gas-tight seal (to prevent escape of any gas combustion products) a quantity of heat resistant padding or lining may be provided, on the inner surface of the housing walls and/or the outer surface of the pan walls. To reduce wear, it is thought preferable that the padding/lining is provided on one only of the housing and pan.

It will be understood, from the foregoing, that it is also conceivable that the cooking apparatus could be constructed "as one", with the pan and housing being integral with one another. However, in order to facilitate cleaning of the base of the housing, it is evident that a two-part construction offers many advantages. In addition, manufacture of the various components (notably the fins 40 and 41) is greatly simplified where the housing and pan are formed separately. Insofar as the gas burner is concerned, a variety of burners are thought likely to be suitable, although so-called "neat gas" burners are envisaged as being particularly appropriate. Such burners, as will be understood by those skilled in the relevant art, do not require any pre-aeration of the gaseous fuel, with the oxygen needed for combustion being drawn from the surrounding atmosphere as ignition occurs, assisted by a source of negative pressure. A particularly suitable form of burner may be that shown in the inventor's co-pending British patent application, no. 0401374.4.

Other forms of burner - and combustion - are nonetheless contemplated. Pre-mixed burners could thus conceivably be used, perhaps in conjunction with a forced air blower to provide a source of positive pressure.

When used in this specification and claims, the terms "comprises" and "comprising" and variations thereof mean that the specified features, steps or integers are included. The terms are not to be interpreted to exclude the presence of other features, steps or components.

The features disclosed in the foregoing description, or the following claims, or the accompanying drawings, expressed in their specific forms or in terms of a means for performing the disclosed function, or a method or process for attaining the disclosed result, as appropriate, may, separately, or in any combination of such features, be utilised for realising the invention in diverse forms thereof.

## Claims

1. Apparatus for cooking foods comprising a housing and a pan for receiving foods to be cooked, the housing having an inlet for the introduction of gaseous fuel and an outlet for fuel combustion products, the housing and pan each having walls spaced from each other so as to allow gas to flow therebetween, with a baffle being provided between the housing and pan to cause heated gas to flow around the pan, towards the outlet.

2. Apparatus for cooking according to claim 1 wherein the baffle is disposed so as to direct heated gas around the pan in a substantially single direction.

3. Apparatus for cooking according to claim 1 or claim 2 wherein the pan has front, rear and side walls, with the baffle directing the heated gas around each said wall of the pan.

4. Apparatus for cooking according to claim 1, claim 2 or claim 3 wherein the pan has a floor, spaced from a base of the housing, with the inlet being disposed towards a front part of the floor such that heated gas passes beneath the floor of the pan, prior to being directed around said walls.

5. Apparatus for cooking according to any one of the preceding claims wherein there is provided, upstream of the baffle, a flow restrictor operative to restrict the flow of some of the heated gas so as to assist the proper circulation of heated gas around the pan.

6. Apparatus for cooking according to claim 5 wherein the restrictor is graduated such that different degrees of flow restriction are provided by different parts thereof.

7. Apparatus for cooking according to claim 5 or claim 6 wherein the flow restrictor comprises a barrier disposed towards the base of the housing.

8. Apparatus for cooking according to claim 7 wherein the effective height of the barrier decreases towards one end thereof.

9. Apparatus for cooking according to claim 8 wherein the effective height decreases towards that part of the barrier disposed closest to the baffle.

10. Apparatus for cooking according to claim 7, claim 8 or claim 9 wherein the barrier is disposed between the base of the housing and a lower part of the pan.

11. Apparatus for cooking according to claim 11 wherein the gap between one end of the barrier and the pan is approximately twice that which exists between the other end and the pan.

12. Apparatus for cooking according to any one of the preceding claims wherein the baffle comprises an inner wall disposed between rear walls of the pan and housing.

13. Apparatus for cooking according to any one of the preceding claims wherein the baffle is disposed adjacent the outlet.

14. Apparatus for cooking according to claim 12 or claim 13 wherein the baffle and outlet are disposed to one side of the rear wall of the housing.

15. Apparatus for cooking according to any one of the preceding claims wherein the outlet is adjustable so as to vary the degree of aspiration provided by an extractor connected thereto.

16. Apparatus for cooking according to claim 15 wherein the outlet is adjustable by means of a valve.

17. Apparatus for cooking according to claim 16 wherein the valve is operably connected to a control member disposed towards the front of the apparatus.

18. Apparatus for cooking according to any one of the preceding claims wherein the pan is releasably locatable within the housing.

19. Apparatus for cooking according to any one of claims 3 to 18 wherein the baffle is provided by a fin disposed on an outer surface of the pan's rear wall.

20. Apparatus for cooking according to claim 19 wherein the fin is locatable within a channel or guide provided on an inner surface of the housing's rear wall.

21. A cooking pan for removable location within a combustion chamber, the pan having walls which, when the pan is so located, are spaced from walls of the chamber so as to allow heated gas to flow therebetween, and a baffle operative, in use, to cause heated gas to flow around the pan towards an outlet of the chamber.

22. A cooking pan according to claim 21 wherein the baffle is disposed such that, in use; it directs the heated gas around the pan in a substantially single direction.

23. A cooking pan according to claim 21 or claim 22 wherein the baffle is operative, in use, to direct the heated gas around each wall of the pan.

24. In combination, a cooking pan and a combustion chamber in which the pan is removably locatable, the pan and chamber, when so located, having walls spaced from each other so as to allow gas to flow therebetween, a baffle being provided on at least one of the pan and chamber such that, in use, heated gas is caused to flow around the pan, towards an outlet of the chamber.

25. A housing for removable reception of a cooking pan, the housing having an inlet for the introduction of gaseous fuel and an outlet for fuel combustion products, the housing having a flow restrictor operative, when the pan is so received, to restrict the flow of some of the heated gas so as to assist in effecting proper circulation of the heated gas around the pan, towards the outlet.
